# EUROPÄISCHE PATENTSCHRIFT

(11) **EP 1 215 009 B1**
(45) Veröffentlichungstag und Bekanntmachung des Hinweises auf die Patenterteilung: **14.04.2004**
(21) Anmeldenummer: 01129530.0
(22) Anmeldetag: 11.12.2001
(51) Int. Cl.: B23Q 11/00, B27G 19/10, B27C 1/00, B23Q 11/08

(54) **Kantenbearbeitungsmaschine mit Absaughaube**
Machine for machining edges having a suction hood
Machine pour l'usinage des arrêtes avec capot d'aspiration

(30) Priorität: 14.12.2000 DE 10062290
(43) Veröffentlichungstag der Anmeldung: 19.06.2002
(73) Patentinhaber: SBR MASCHINEN-HANDELSGESELLSCHAFT MBH & CO. KG, D-32051 Herford (DE)
(72) Erfinder: Rottmann, Manfred, 32120 Hiddenhausen (DE)
(74) Vertreter: Gramm, Werner, Prof. Dipl.-Ing.

(56) Entgegenhaltungen:
- DE-A- 3 943 595
- DE-A- 19 802 308
- DE-U- 29 623 680
- DE-U- 29 907 571

## Beschreibung

Die Erfindung betrifft eine Kantenbearbeitungsmaschine, an deren Maschinenständern zumindest ein Durchlaufförderer für die im Durchlauf zu bearbeitenden Werkstücke sowie neben diesem Durchlaufförderer zumindest ein Werkzeugaggregat mit einer lotrechten Werkzeugspindel montiert sind, die mit zumindest einem Werkzeug bestückt ist, das in seiner Arbeitsposition an mehreren Seiten von einer Absaughaube umschlossen ist, die auf ihrer dem Durchlaufförderer zugewandten Seite eine Werkzeugaustrittsöffnung aufweist und zum Werkzeugwechsel in eine Ruheposition anhebbar ist.

Eine derartige Ausführungsform lässt sich dem deutschen Gebrauchsmuster Nr. 296 23 680.2 entnehmen. Das Werkzeugaggregat ist hier als Vertikal- und Horizontalsupport ausgebildet, der eine Aufnahme aufweist, in der die Absaughaube frei hängt, und der aus seiner Arbeitsstellung heraus an einer Vertikalführung in eine obere Absaughauben-Übergabestellung oder an einer Horizontalführung in eine seitliche Werkezeugwechselposition motorisch verfahrbar ist. Am Maschinenständer ist eine die Absaughaube bei Erreichen der genannten oberen Übergabestellung am Maschinenständer festlegende und dadurch von dem Support trennende Verriegelung vorgesehen, die nach Rückkehr des mit neuem Werkzeug bestückten Support in die genannte obere Übergabestellung zur Übernahme der Absaughaube entriegelbar ist.

Unter Kantenbearbeitungsmaschinen sind Doppelendprofiler, Zapfen- und Schlitzmaschinen sowie Profiliermaschinen und dergleichen zu verstehen. In diesen Maschinen werden kontinuierlich durchlaufende Werkstücke an ihren Kanten durch Fräsen, Bohren oder Schlitzen bearbeitet. Das hierfür vorgesehene Werkzeug, das ein Einzelwerkzeug oder aber auch ein Werkzeugsatz sein kann, muss aus Gründen des Umweltschutzes von einer Absaughaube weitgehend eingekapselt sein, über die der Bearbeitungsstaub sowie Späne durch eine an die Absaughaube angeschlossene Absaugleitung abgesaugt werden. Diese Absaughaube steht einem Werkzeugwechsel hindernd im Wege. Um die Werkzeug-Zugänglichkeit zu verbessern, ist die vorstehend näher beschriebene Konstruktion vorgesehen.

Die DE 299 07 571 U1 offenbart eine Späneleiteinrichtung für ein Zerspanaggregat, das in eine Spindeleinheit einer zur Bearbeitung von z.B. plattenförmigen Werkstücken dienenden Bearbeitungsmaschine einwechselbar ist. Diese Späneleiteinrichtung weist eine Umfangswand auf, die das Zerspanwerkzeug umfangsseitig über einen Teilumfangsbereich umgibt und strömungsmechanisch so ausgebildet ist, dass die beim Zerspanen herausgeschleuderten Späne an der Umfangswand aufprallen und unter Ausnutzung ihrer dann noch vorhandenen kinetischen Restenergie über eine Späneleitfläche zu einer Absauganschlussstelle geleitet werden, an der eine Absaugeinrichtung anschließbar ist. Die hohe kinetische Energie der Späne soll also zu deren Ableitung nutzbar gemacht werden, wobei die Umfangswand der Späneleiteinrichtung die kinetische Energie auf ein gewünschtes und handhabbares Maß reduziert, und die verbleibende restliche kinetische Energie der Späne durch eine mechanische, schraubenförmige Leitfläche dahingehend ausgenutzt wird, dass die Späne durch ihre eigene kinetische Restenergie in gewünschter Weise zu einer Absauganschlussstelle geleitet werden, an der die Späne dann nur noch eine die Absaugung nicht mehr behindernde kinetische Restenergie aufweisen. Die auf der Wandungsinnenseite der Umfangswand befestigte schraubenförmige Späneleitfläche endet etwa auf halber Höhe der Umfangswand unterhalb einer Absauganschlussöffnung, die in einem die Umfangswand oben abschließenden Deckelelement exzentrisch zum Zerspanungswerkzeug angeordnet ist.

Die DE 198 02 308 A1 offenbart eine Absaugvorrichtung für Sandstrahl- und Flüssigkeitsdruckdüsen. Vorgesehen ist hier eine Doppelwandschutzhaube mit einem unteren ringförmigen Saugkanal, über den sich die Doppelwandschutzhaube auf ihrem gesamten Umfang an die Arbeitsfläche ansaugt und dort selber festhält. In den Hohlraum der Doppelwandschutzhaube sind zahlreiche Saugrohrstutzen angeschlossen.

Der Erfindung liegt die Aufgabe zugrunde, die eingangs beschriebene Kantenbearbeitungsmaschine unter Beibehaltung des erleichterten Werkzeugwechsels hinsichtlich der Absaugeffizienz von bei der Bearbeitung anfallenden Spänen, Staub und dergleichen zu verbessern.

Ausgehend von der eingangs beschriebenen Kantenbearbeitungsmaschine wird diese Aufgabe erfindungsgemäß dadurch gelöst, dass die Absaughaube einen etwa teilzylindrischen Außenmantel aufweist, der mit einem radial von ihm beabstandeten Innenmantel einen etwa teilzylindrischen Ringraum bildet, der neben der genannten Werkzeugaustrittsöffnung auf der der Werkzeug-Drehrichtung entgegengerichteten Seite einen Ansaugschlitz bildet und eine sich hieran anschließende, spiralförmig nach oben geführte Späneleitspirale aufweist, die unterhalb eines Absaugstutzens ausmündet, der exzentrisch auf einer oberen Abdeckung der Absaughaube montiert ist.

Das Werkzeug ist in seiner Arbeitsstellung gegenüber dem Ansaugschlitz so zu positionieren, dass die Späne, der Bearbeitungsstaub und dergleichen bei Bearbeitung eines Werkstückes unmittelbar in den Ansaugschlitz gelangen, von wo sie über die Spindelleitspirale pneumatisch nach oben gefördert und über den Absaugstutzen abgesaugt werden.

Zusätzlich ist es vorteilhaft, wenn auf der anderen Seite neben der Werkzeugaustrittsöffnung ein sich über deren axiale Höhe erstreckender, stirnseitig abgerundeter Spänefänger vorgesehen ist, der mit dem Innenmantel der Absaughaube eine Späneeintrittöffnung definiert, die die im Innenmantelbereich vom Werkezeug nach außen geschleuderten Späne auffängt und zum Absaugstutzen hin absaugen lässt.

Bei der erfindungsgemäßen Ausführungsform kann die Absaughaube in ihrer Arbeitsstellung auf einem Support des zugeordneten Werkzeugaggregates ruhen, das in an sich bekannter Weise als Vertikal- und Horizontalsupport ausgebildet sein kann, der aus seiner Arbeitsstellung heraus in eine obere Absaughauben-Übergabestellung oder in eine seitliche Werkzeugwechselposition motorisch verfahrbar ist.

Soll eine Profilierung der Werkstücke erfolgen, ist eine Konterprofileinrichtung vorteilhaft, die konzentrisch den Außenmantel der Absaughaube umschließt und über einen gesteuerten Schwenkantrieb um die Zylinderachse der Absaughaube entgegen der Werkzeug-Drehrichtung bis zur Rückseite des jeweils durchlaufenden Werkstücks einschwenkbar ist und in dieser eingeschwenkten Position eine Späneleitfläche zwischen dem jeweils durchlaufenden Werkstück und dem Ansaugschlitz der Absaughaube bildet. Dabei kommt die Späneleitfläche mit einem Konterprofilanschlag zur Anlage an der Rückseite des jeweils durchlaufenden Werkstücks, wobei es zweckmäßig ist, wenn die genannte Anlage des Konterprofilanschlags über einen an der Konterprofileinrichtung angelenkten Andruckzylinder erfolgt.

Weitere Merkmale der Erfindung sind Gegenstand der Unteransprüche und werden in Verbindung mit weiteren Vorteilen der Erfindung anhand einiger Ausführungsbeispiele näher erläutert.

In der Zeichnung ist eine als Beispiel dienende Ausführungsform der Erfindung schematisch dargestellt. Es zeigen
- **Figur 1**: in Seitenansicht einen Ausschnitt einer Kantenbearbeitungsmaschine mit zwei Werkzeugaggregaten mit jeweils angehobener Absaughaube und einschwenkbarer Konterprofileinrichtung;
- **Figur 2**: in vergrößertem Maßstab in Einzeldarstellung einen Vertikalschnitt durch ein Werkzeugaggregat mit abgesenkter Absaughaube;
- **Figur 3**: in Vorderansicht eine Absaughaube mit Absaugstutzen;
- **Figur 4**: eine Absaughaube in Seitenansicht;
- **Figur 5**: die Absaughaube gemäß Figur 4 in einer um 90° verdrehten Seitenansicht;
- **Figur 6**: eine obere Abdeckung der Absaughaube gemäß Figur 4 und 5;
- **Figur 7**: die Absaughaube gemäß Figur 4 in Draufsicht;
- **Figur 8**: einen Horizontalschnitt durch die Absaughaube gemäß Figur 4;
- **Figur 9**: einen Schnitt gemäß der Linie A-A in Figur 8;
- **Figur 10**: in Draufsicht und z.T. im Horizontalschnitt ein einem Durchlaufförderer zugeordnetes Werkzeugaggregat mit ausgeschwenkter Konterprofileinrichtung und
- **Figur 11**: die Darstellung gemäß Figur 10 mit eingeschwenkter Konterprofileinrichtung.

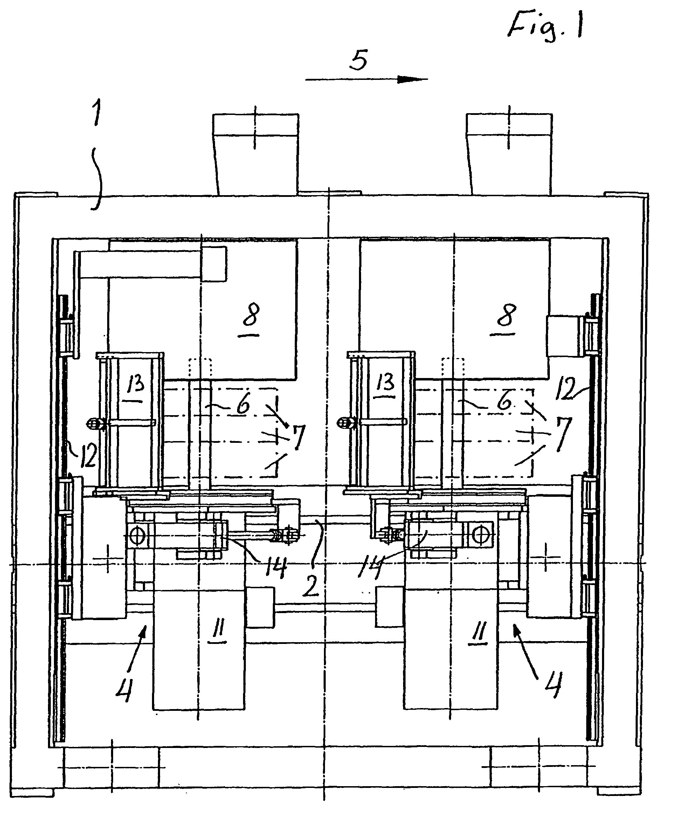

Figur 1 zeigt von einer Kantenbearbeitungsmaschine einen Maschinenständer 1, an dem ein Durchlaufförderer 2 für die im Durchlauf zu bearbeitenden Werkstükke 3 (siehe Figuren 10 und 11) sowie vor diesem Durchlaufförderer 2 zwei Werkzeugaggregate 4 montiert sind. Die Vorschubrichtung des Durchlaufförderers 2 ist in den Figuren 1, 10 und 11 jeweils mit einem Pfeil 5 gekennzeichnet; demnach werden bei der Ansicht gemäß Figur 1 die zu bearbeitenden Werkstükke 3 von links nach rechts an den Werkzeugaggregaten 4 vorbeigefördert (siehe auch die Darstellung gemäß den Figuren 10 und 11).

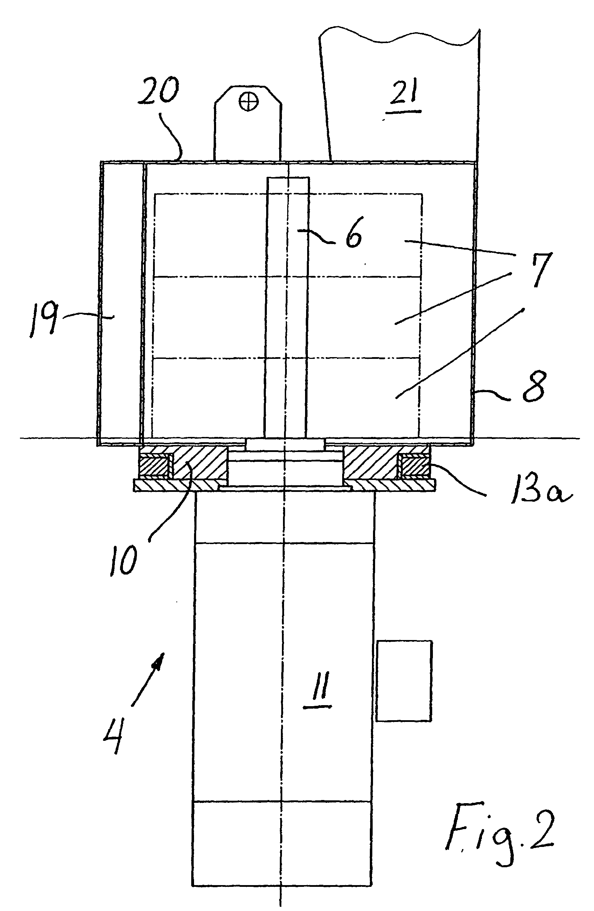

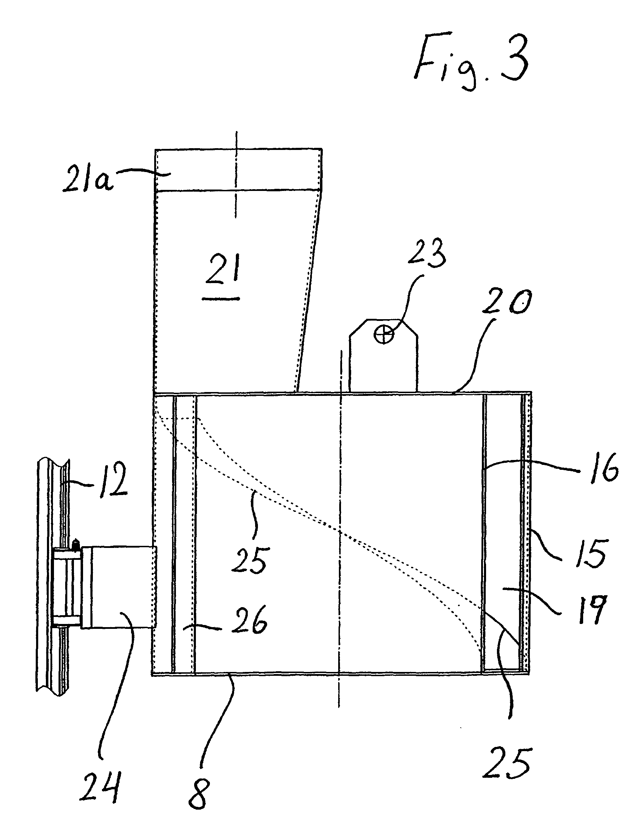

Jedes Werkzeugaggregat 4 weist eine Werkzeugspindel 6 auf, die mit Werkzeugen 7 bestückt sind, die gemäß Figur 1 Zapfenschneid- und Schlitzwerkzeuge sein können. Die sich in ihrer Arbeitsposition befindlichen Werkzeuge (Figuren 10 und 11) sind an mehreren Seiten von einer Absaughaube 8 umschlossen (siehe auch Figur 2), die auf ihrer dem Durchlaufförderer 2 zugewandten Seite eine Werkzeugaustrittsöffnung 9 aufweist (siehe insbesondere Figuren 3 und 10). In ihrer Arbeitsstellung ruht die Absaughaube 8 auf einem Support 10 (siehe Figur 2) eines Motors 11 des zugeordneten Werkzeugaggregates 4. Zum Werkzeugwechsel wird die Absaughaube 8 auf einer vertikalen Kugelschienenführung 12 in eine Ruheposition angehoben, in der sie z.B. mittels einer pneumatischen Haltevorrichtung festgehalten und gesichert werden kann. Hierfür ist es zweckmäßig, wenn das Werkzeugaggregat 4 als Vertikal- und Horizontalsupport ausgebildet ist, der aus seiner Arbeitsstellung heraus in eine obere Absaughauben-Übergabestellung oder aber in eine seitliche Werkzeugwechselposition motorisch verfahrbar ist.

Figur 1 zeigt die Absaughauben 8 beider Werkzeugaggregate 4 in ihrer angehobenen Ruheposition; die Werzeugaggregate 4 befinden sich in ihrer Werkzeugwechselposition.

Jedem der beiden in Figur 1 dargestellten Werkzeugaggregate 4 ist eine einschwenkbare Konterprofileinrichtung 13 zugeordnet, die über einen Schwenkzylinder 14 in ihre Arbeitsposition bzw. in ihre Ruhestellung einschwenkbar ist. Aufbau und Wirkungsweise dieser Konterprofileinrichtung wird später anhand der Figuren 10 und 11 näher erläutert.

Figur 2 zeigt in schematischer Darstellung ein Werkzeugaggregat 4 mit seiner lotrechten Werkzeugspindel 6, die mit Werkzeugen 7 bestückt ist und von einem Motor 11 angetrieben wird. Eine die Werkzeuge 7 teilweise umgreifende Absaughaube 8 liegt auf dem Support 10 auf, an dem die Konterprofileinrichtung 13 drehbar gelagert ist, von der in Figur 2 lediglich ein Drehkranz 13a angedeutet ist.

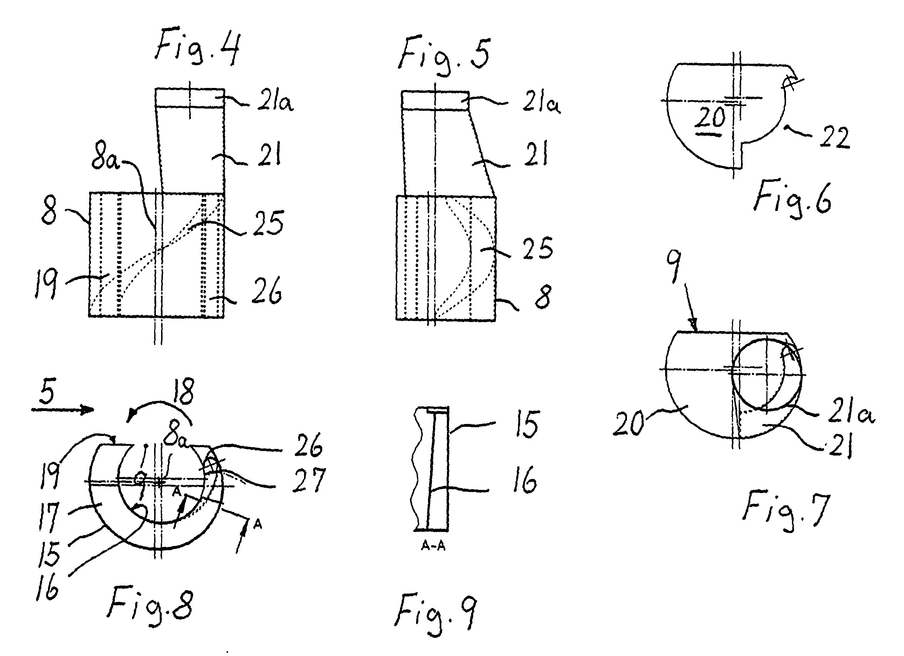

Die in Figur 3 dargestellte Absaughaube 8 besteht aus einem etwa teilzylindrischen Außenmantel 15, der mit einem radial von ihm beabstandeten Innenmantel 16 (siehe hierzu insbesondere auch Figur 8) einen etwa teilzylindrischen Ringraum 17 bildet, der neben der genannten Werkzeugaustrittsöffnung 9 auf der der Werkzeug-Drehrichtung 18 entgegengerichteten Seite einen Ansaugschlitz 19 bildet, der bei der Ausführungsform gemäß Figur 2 links, bei der Ausführungsform gemäß Figur 3 hingegen rechts dargestellt ist. Die Absaughaube 8 weist eine obere Abdeckung 20 auf, auf der exzentrisch ein Absaugstutzen 21 montiert ist. Figur 6 lässt erkennen, dass die obere Abdeckung 20 eine ringsegmentförmige Durchströmöffnung 22 für den Anschluss des Absaugstutzens 21 aufweist. Im Übrigen lässt Figur 3 noch eine Haubensicherungsbohrung 23 zur Festlegung der Absaughaube 8 in ihrer oberen Ruheposition und eine seitlich angebrachte Befes-tigungsfläche 24 erkennen, die zur Vertikalführung der Absaughaube 8 beim Anheben bzw. Absenken dient.

Die Figuren 4 und 5 lassen erkennen, dass in dem Ringraum 17 der Absaughaube 8 eine Späneleitspirale 25 angeordnet ist, die sich unten an den Ansaugschlitz 19 anschließt und spiralförmig über etwa den halben Umfang der Absaughaube 8 nach oben geführt ist, wo sie unterhalb des Absaugstutzens 21 bzw. der Durchströmöffnung 22 in der oberen Abdeckung 20 ausmündet.

Insbesondere die Figuren 3, 8 und 10 lassen erkennen, dass auf der dem Ansaugschlitz 19 der Absaughaube 8 etwa gegenüber liegenden Seite neben der Werkzeugaustrittsöffnung 9 ein sich über deren axiale Höhe erstreckender, stirnseitig abgerundeter Spänefänger 26 vorgesehen ist, der mit dem Innenmantel 16 der Absaughaube 8 eine Späneeintrittöffnung 27 definiert, die die im Innenmantelbereich vom Werkzeug 7 nach außen geschleuderten Späne auffängt und zum Absaugstutzen 21 hin absaugen lässt.

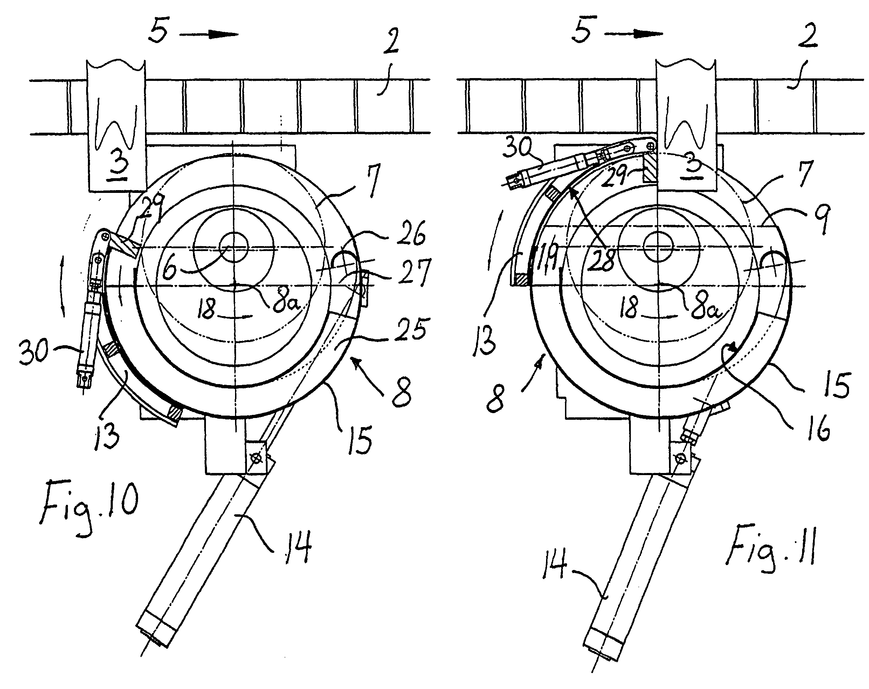

Gemäß Figur 9 verjüngt sich der Querschnitt des Ringraumes 17 der Absaughaube 8 über deren Höhe leicht konisch. Die Figuren 3 - 7 lassen ferner erkennen, dass der Absaugstutzen 21 in seinem unteren Anschlussbereich einen der ringsegmentförmigen Durchströmöffnung 22 angepassten Querschnitt aufweist, nach oben aber in einen zylindrischen Abschnitt 21 a übergeht.

Die in den Figuren 1, 10 und 11 dargestellte Konterprofileinrichtung 13 ist als Kreissegment ausgebildet, das den Außenmantel 15 der Absaughaube 8 konzentrisch umschließt und über einen gesteuerten Schwenkantrieb 14 um die Zylinderachse 8a der Absaughaube 8 entgegen der Werkzeug-Drehrichtung 18 bis zur Rückseite des jeweils durchlaufenden Werkstücks 3 einschwenkbar ist. In dieser in Figur 11 dargestellten eingeschwenkten Position bildet die Konterprofileinrichtung 13 eine Späneleitfläche 28 zwischen dem jeweils durchlaufenden Werkstück 3 und dem Ansaugschlitz 19 der Absaughaube 8. Diese Späneleitfläche 28 ist an ihrer vorlaufenden Stirnseite mit einem Konterprofilanschlag 29 bestückt, der beim Einschwenken der Konterprofileinrichtung 13 über einen an ihr angelenkten Andruckzylinder 30 zur Anlage an der Rückseite des jeweils durchlaufenden Werkstücks 3 gebracht wird. Dadurch wird ein Ausreißen bei der Bearbeitung des Werkstücks 3 verhindert.

Diese Konterprofileinrichtung 13 ist nur bei Profilierung der Werkstücke erforderlich, um deren Ausreißen zu verhindern und gleichzeitig einen sicheren Spänetransport in den Ansaugschlitz 19 der Absaughaube 8 zu gewährleisten. Bei normalen Fräsarbeiten kann die Konterprofileinrichtung 13 entfallen; das Werkzeug 7 wird dann etwas dichter neben dem Ansaugschlitz 19 der Absaughaube 8 positioniert, so dass die beim Fräsen anfallenden Späne sicher in den Ansaugschlitz gelangen und über die Späneleitspirale 25 nach oben in den Absaugstutzen 21 gesaugt werden können.

## Patentansprüche

1. Kantenbearbeitungsmaschine, an deren Maschinenständern (1) zumindest ein Durchlaufförderer (2) für die im Durchlauf zu bearbeitenden Werkstükke (3) sowie neben diesem Durchlaufförderer (2) zumindest ein Werkzeugaggregat (4) mit einer lotrechten Werkzeugspindel (6) montiert sind, die mit zumindest einem Werkzeug (7) bestückt ist, das in seiner Arbeitsposition an mehreren Seiten von einer Absaughaube (8) umschlossen ist, die auf ihrer dem Durchlaufförderer (2) zugewandten Seite eine Werkzeugaustrittsöffnung (9) aufweist und zum Werkzeugwechsel in eine Ruheposition anhebbar ist, **dadurch gekennzeichnet, dass** die Absaughaube (8) einen etwa teilzylindrischen Außenmantel (15) aufweist, der mit einem radial von ihm beabstandeten Innenmantel (16) einen etwa teilzylindrischen Ringraum (17) bildet, der neben der genannten Werkzeugaustrittsöffnung (9) auf der der Werkzeug-Drehrichtung (18) entgegengerichteten Seite einen Ansaugschlitz (19) bildet und eine sich hieran anschließende, spiralförmig nach oben geführte Späneleitspirale (25) aufweist, die unterhalb eines Absaugstutzens (21) ausmündet, der exzentrisch auf einer oberen Abdeckung (20) der Absaughaube (8) montiert ist.

2. Kantenbearbeitungsmaschine nach Anspruch 1, **dadurch gekennzeichnet, dass** sich die Späneleitspirale (25) über etwa den halben Umfang der Absaughaube (8) erstreckt.

3. Kantenbearbeitungsmaschine nach Anspruch 1 oder 2, **dadurch gekennzeichnet, dass** die obere Abdeckung (20) der Absaughaube (8) eine ringsegmentförmige Durchströmöffnung (22) für den Anschluss des Absaugstutzens (21) aufweist.

4. Kantenbearbeitungsmaschine nach Anspruch 1, 2 oder 3, **dadurch gekennzeichnet,, dass** auf der anderen Seite neben der Werkzeugaustrittsöffnung (9) ein sich über deren axiale Höhe erstreckender, stirnseitig abgerundeter Spänefänger (26) vorgesehen ist, der mit dem Innenmantel (16) der Absaughaube (8) eine Späneeintrittöffnung (27) definiert, die die im Innenmantelbereich vom Werkzeug (7) nach außen geschleuderten Späne auffängt und zum Absaugstutzen (21) hin absaugen lässt.

5. Kantenbearbeitungsmaschine nach einem der vorhergehenden Ansprüche, **dadurch gekennzeichnet, dass** die Absaughaube (8) in ihrer Arbeitsstellung auf einem Support (10) des zugeordneten Werkzeugaggregates (4) ruht.

6. Kantenbearbeitungsmaschine nach einem der vorhergehenden Ansprüche, **dadurch gekennzeichnet, dass** die Absaughaube (8) auf einer vertikalen Kugelschienenführung (12) separat geführt ist.

7. Kantenbearbeitungsmaschine nach einem der vorhergehenden Ansprüche, **dadurch gekennzeichnet, dass** das Werkzeugaggregat (4) als Vertikal- und Horizontalsupport ausgebildet ist, der aus seiner Arbeitsstellung heraus in eine obere Absaughauben-Übergabestellung oder in eine seitliche Werkzeugwechselposition motorisch verfahrbar ist.

8. Kantenbearbeitungsmaschine nach einem der vorhergehenden Ansprüche, **gekennzeichnet durch** eine Konterprofileinrichtung (13), die konzentrisch den Außenmantel (15) der Absaughaube (8) umschließt und über einen gesteuerten Schwenkantrieb (14) um die Zylinderachse (8a) der Absaughaube (8) entgegen der Werkzeug-Drehrichtung (18) bis zur Rückseite des jeweils durchlaufenden Werkstücks (3) einschwenkbar ist und in dieser eingeschwenkten Position eine Späneleitfläche (28) zwischen dem jeweils durchlaufenden Werkstück (3) und dem Ansaugschlitz (19) der Absaughaube (8) bildet.

9. Kantenbearbeitungsmaschine nach Anspruch 8, **dadurch gekennzeichnet, dass** die Späneleitfläche (28) mit einem Konterprofilanschlag (29) zur Anlage an der Rückseite des jeweils durchlaufenden Werkstücks (3) kommt.

10. Kantenbearbeitungsmaschine nach Anspruch 9, **dadurch gekennzeichnet, dass** die genannte Anlage des Konterprofilanschlags (29) über einen an der Konterprofileinrichtung (13) angelenkten Andruckzylinder (30) erfolgt.

## Claims

1. Edge-trimming machine, on the machine columns (1) of which are mounted at least one continuous conveyor (2) for the workpieces (3) which are to be trimmed continuously and, next to this continuous conveyor (2), at least one tool unit (4) having a vertical tool spindle (6), which is fitted with at least one tool (7) which, in its working position, is surrounded by an extractor hood (8) on a plurality of sides and on its side facing the continuous conveyor (2) has a tool outlet opening (9), and which can be raised into an at-rest position for a tool change, **characterized in that** the extractor hood (8) has an approximately partially cylindrical outer shell (15) which, together with an inner shell (16) which is at a radial distance from it, forms an approximately partially cylindrical ring space (17) which, next to the said tool outlet opening (9), on the side directed oppositely to the direction of rotation (18) of the tool, forms a suction slot (19) and has an adjoining chip-guiding spiral (25) which leads helically upwards and opens out below an extractor connection piece (21) which is mounted eccentrically on an upper cover (20) of the extractor hood (8).

2. Edge-trimming machine according to Claim 1, **characterized in that** the chip-guiding spiral (25) extends over approximately half the periphery of the extractor hood (8).

3. Edge-trimming machine according to Claim 1 or 2, **characterized in that** the upper cover (20) of the extractor hood (8) has a through-flow opening (22) in the form of a segment of a ring for connection of the extractor connection piece (21).

4. Edge-trimming machine according to Claim 1, 2 or 3, **characterized in that** on the other side next to the tool outlet opening (9) there is a chip trap (26) which extends over the axial height of the tool outlet opening, is provided with end-side rounding and, together with the inner shell (16) of the extractor hood (8), defines a chip inlet opening (27) which collects the chips which are thrown outwards by the tool (7) in the inner shell region and allows them to be sucked out towards the extractor connection piece (21).

5. Edge-trimming machine according to one of the preceding claims, **characterized in that** in its working position the extractor hood (8) rests on a support (10) of the associated tool unit (4).

6. Edge-trimming machine according to one of the preceding claims, **characterized in that** the extractor hood (8) is guided separately on a vertical ball-and-rail guide (12).

7. Edge-trimming machine according to one of the preceding claims, **characterized in that** the tool unit (4) is designed as a vertical and horizontal support which can be driven out of its working position into an upper extractor hood transfer position or into a lateral tool change position.

8. Edge-trimming machine according to one of the preceding claims, **characterized by** a locking profile device (13) which concentrically surrounds the outer shell (15) of the extractor hood (8) and, by means of a controlled pivoting drive (14), can be pivoted about the cylinder axis (8a) of the extractor hood (8), in the opposite direction to the direction of rotation (18) of the tool, as far as the rear side of the workpiece (3) which is then passing through, and in this pivoted-in position forms a chip-guiding surface (28) between the workpiece (3) which is then passing through and the suction slot (19) of the extractor hood (8).

9. Edge-trimming machine according to Claim 8, **characterized in that** the chip-guiding surface (28) comes to bear, by means of a locking profile stop (29), against the rear side of the workpiece (3) which is then passing through.

10. Edge-trimming machine according to Claim 9, **characterized in that** the abovementioned bearing of the locking profile stop (29) is effected by means of a pressure-exerting cylinder (30) which is articulatedly mounted on the locking profile device (13).

## Revendications

1. Machine pour l'usinage des arêtes, sur les montants (1) de laquelle sont montés au moins un convoyeur traversant (2) pour les pièces d'oeuvre (3) à usiner au cours de la traversée ainsi que, à côté de ce convoyeur traversant (2), au moins un ensemble d'outil (4) avec une broche d'outil (6) verticale, qui est équipée d'au moins un outil (7), qui dans sa position de travail est entouré de plusieurs côtés par un capot d'aspiration (8) qui présente une ouverture de sortie de l'outil(9) du côté tourné vers le convoyeur traversant (2) et qui peut être relevé en position de repos pour le remplacement de l'outil, **caractérisée en ce que** le capot d'aspiration (8) présente une paroi extérieure (15) sensiblement en forme de cylindre partiel, qui constitue avec une paroi intérieure (16) dont elle est radialement espacée une chambre annulaire (17) sensiblement en forme de cylindre partiel, qui forme à côté de ladite ouverture de sortie de l'outil (9) une fente d'aspiration (19) du côté opposé à la direction de rotation (18) de l'outil et comporte une spirale de guidage des copeaux (25) qui se raccorde à cette fente, s'étend vers le haut en forme de spirale, et débouche en-dessous d'un raccord d'aspiration (21) monté excentriquement sur un couvercle supérieur (20) du capot d'aspiration (8).

2. Machine pour l'usinage des arêtes selon la revendication 1, **caractérisée en ce que** la spirale de guidage des copeaux (25) s'étend sur environ la moitié du pourtour du capot d'aspiration (8).

3. Machine pour l'usinage des arêtes selon la revendication 1 ou 2, **caractérisée en ce que** le couvercle supérieur (20) du capot d'aspiration (8) présente une ouverture d'écoulement traversant (22) en forme de segment d'anneau pour le raccordement du raccord d'aspiration (21).

4. Machine pour l'usinage des arêtes selon la revendication 1, 2 ou 3, **caractérisée en ce que** de l'autre côté il est prévu à côté de l'ouverture de sortie de l'outil (9) un collecteur de copeaux (26) s'étendant sur la hauteur axiale de l'ouverture de sortie de l'outil, arrondi sur son côté frontal, lequel collecteur de copeaux définit avec la paroi intérieure (16) du capot d'aspiration (8) une ouverture d'entrée des copeaux (27) qui recueille les copeaux projetés vers l'extérieur par l'outil (7) dans la zone de la paroi intérieure, et les fait aspirer vers le raccord d'aspiration (21).

5. Machine pour l'usinage des arêtes selon l'une des revendication précédentes, **caractérisée en ce que** dans sa position de travail, le capot d'aspiration (8) repose sur un support (10) de l'ensemble d'outil associé (4).

6. Machine pour l'usinage des arêtes selon l'une des revendication précédentes, **caractérisée en ce que** le capot d'aspiration (8) est guidé séparément sur une glissière à billes verticale (12).

7. Machine pour l'usinage des arêtes selon l'une des revendication précédentes, **caractérisée en ce que** l'ensemble d'outil (4) est réalisé en tant que support vertical et horizontal qui peut être déplacé de façon motorisée de sa position de travail dans une position supérieure de transfert du capot d'aspiration ou dans une position latérale de remplacement d'outil.

8. Machine pour l'usinage des arêtes selon l'une des revendication précédentes, **caractérisée par** un agencement de contre-profil (13), qui entoure concentriquement la paroi extérieure (15) du capot d'aspiration (8) et que l'on peut faire pivoter autour de l'axe de cylindre (8a) du capot d'aspiration (8) au moyen d'un entraînement de pivotement commandé (14) à l'encontre de la direction de rotation (18) de l'outil jusqu'au côté arrière de la pièce d'oeuvre (3) en train de traverser la machine, et qui constitue dans cette position pivotée une face de guidage des copeaux (28) entre la pièce d'oeuvre (3) en cours de traversée et la fente d'aspiration (19) du capot d'aspiration (8).

9. Machine pour l'usinage des arêtes selon la revendication 8, **caractérisée en ce que** la face de guidage des copeaux (28) vient en appui sur le côté arrière de la pièce d'oeuvre en cours de traversée (3), au moyen d'une butée de contre-profil (29).

10. Machine pour l'usinage des arêtes selon la revendication 9, **caractérisée en ce que** l'appui précité de la butée de contre-profil (29) se produit par l'intermédiaire d'un cylindre presseur (30) articulé à l'agencement de contre-profil (13).
